# EUROPEAN PATENT SPECIFICATION

(11) **EP 3 724 940 B1**
(45) Date of publication and mention of the grant of the patent: **03.01.2024**
(21) Application number: 18808391.9
(22) Date of filing: 04.12.2018
(51) Int. Cl.: H01M 4/1391, H01M 4/36, H01M 4/62, C08G 77/30, C08G 77/48, C08L 83/08, C08L 83/14, H01M 4/1397, C09D 183/00, C09J 183/00, C08L 83/00, C08G 77/00

(54) **PROCESS FOR MAKING A CATHODE, AND INTERMEDIATES SUITABLE THEREFOR**
VERFAHREN ZUR HERSTELLUNG EINER KATHODE UND VON DAFÜR GEEIGNETEN ZWISCHENPRODUKTEN
PROCÉDÉ DE FABRICATION D'UNE CATHODE ET INTERMÉDIAIRES ADAPTÉS À CET EFFET

(30) Priority: 13.12.2017 EP 17206915; 13.12.2017 EP 17206913
(43) Date of publication of application: 21.10.2020
(73) Proprietor: BASF SE, 67056 Ludwigshafen am Rhein (DE)
(72) Inventor: MENDEZ AGUDELO, Manuel Alejandro, 67056 Ludwigshafen (DE); HOECKER, Johannes David, 67056 Ludwigshafen (DE); HOLZMANN, Sven, 67056 Ludwigshafen (DE); FIECHTER, Bernd, 67056 Ludwigshafen (DE); KOCH, Marion, 67056 Ludwigshafen (DE); MONTAG, Lucas, 67056 Ludwigshafen (DE); KRIEG, Patrick, 67056 Ludwigshafen (DE); SCHMITT, Volker, 67056 Ludwigshafen (DE)
(74) Representative: BASF IP Association
(86) International application number: PCT/EP2018/083496
(87) International publication number: WO 2019/115291

(56) References cited:
- EP-A1- 2 806 487
- CN-A- 102 212 174
- US-A1- 2006 222 946
- US-A1- 2007 015 053
- US-A1- 2007 026 315
- Kurt Kellner ET AL: "Zur Reaktion yon Chlorsilanen mit Dialkylphosphonaten** On the Reaction of Chlorosilanes with Dialkylphosphonates", Monatshefte ffir Chemie, 1 January 1990 (1990-01-01), pages 1031-1038, XP055478607, Retrieved from the Internet: URL:https://link.springer.com/content/pdf/ 10.1007/BF00809253.pdf [retrieved on 2018-05-29]
- K. KERGER ET AL: "Über neue Organosilylester von Phosphorsäuren", ZEITSCHRIFT FUR ANORGANISCHE UND ALLGEMEINE CHEMIE., vol. 354, no. 1-2, 1 September 1967 (1967-09-01), pages 44-49, XP055478604, DE ISSN: 0044-2313, DOI: 10.1002/zaac.19673540110
- KIM DONG YOUNG ET AL: "Ab initio study of the operating mechanisms of tris(trimethylsilyl) phosphite as a multifunctional additive for Li-ion batteries", JOURNAL OF POWER SOURCES, ELSEVIER SA, CH, vol. 355, 22 April 2017 (2017-04-22), pages 154-163, XP085001670, ISSN: 0378-7753, DOI: 10.1016/J.JPOWSOUR.2017.04.062

## Description

The present invention is directed towards a process for making a cathode, said process comprising the following steps:
(a) Providing a cathode active material selected from layered lithium transition metal oxides, lithiated spinels, lithium transition metal phosphate with olivine structure, and lithium nickel-cobalt aluminum oxides,
(b) treating said cathode active material with an oligomer bearing units according to general formula (I a), 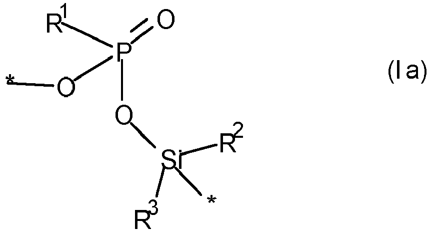 wherein
   R¹ are the same or different and selected from hydrogen, C₁-C₄-alkyl, aryl, and C₄-C₇-cycloalkyl,
   R² and R³ are selected independently at each occurrence from phenyl, C₁-C₈-alkyl, C₄-C₇-cycloalkyl, C₁-C₈-haloalkyl, OPR¹(O)-*, and -(CR⁹₂)ₚ-Si(R²)₂-* wherein one or more non-vicinal CR⁹₂-groups may be replaced by oxygen, R⁹ is selected independently at each occurrence from H and C₁-C₄-alkyl, and p is a variable from zero to 6,
   wherein the overall majority of R² and R³ is selected from C₁-C₈-alkyl,
   and wherein the asterisk * is a placeholder for at least one more unit of formula (I a), or for an end-cap R⁴ with R⁴ being selected from C₁-C₄-alkyl, or for a branching,
   and, optionally, at least one of carbon in electrically conductive form and, optionally, a binder,
(c) applying a slurry of said treated cathode active material to a current collector, and
(d) at least partially removing solvent used in step (c).

Storing electrical energy is a subject of still growing interest. Efficient storage of electric energy would allow electric energy to be generated when it is advantageous and used when needed. Secondary electrochemical cells are well suited for this purpose due to their rechargeability. Secondary lithium batteries are of special interest for energy storage since they provide high energy density due to the small atomic weight and the large ionization energy of lithium, and they have become widely used as a power source for many portable electronics such as cellular phones, laptop computers, mini-cameras, etc.

Although a lot of research work has been done during the years there are still some drawbacks of lithium ion batteries. Among others, cell resistance increase is a problem that may lead to reduced capacity ("capacity fade"). Especially during the first cycles gas may be developed that needs to be removed. Such gas may stem from various sources and reasons. One reason is electrolyte decomposition.

Diverse methods have been tried based on various theories, for example the deactivation of reactive groups on a cathode active material. In US 2009/0286157 a method of surface treatment is disclosed wherein the authors describe the surface treatment of cathode active materials with organometallic compounds selected from certain halosilanes. However, the halide acting as a leaving group may result in problems if it is susceptible to oxidation or reduction reactions.

Polymeric reaction products of O,O'-dialkylphosphonic acid and halosilanes have been described by K. Kellner et al., Monatshefte Chemie 1990, 121, pages 1031 to 1038, and suggested as fungicides and bactericides. Further syntheses of phosphorus and silicon containing monomers and oligomers with end phosphonate and phosphate groups have been described by K. Troev et al., Phosphorus, Sulfur, and Silicon and the Related Elements 1992, 68, pages 107-114, and suggested for the use as biologically active substances

Compounds bearing phosphorus and silicon and their use as flame retardants are disclosed in CN 102 212 174 A. Surface treatment of cathodes with surfactants has been disclosed in US 2007/0015053, and surface treatment of cathode active materials with phosphorus and sulfur compounds has been described in US 2012/0068128 as well.

It was therefore an objective of the present invention to provide a method for improving the cycling behavior and especially reducing the capacity fade and the gas evolution of lithium ion batteries without formation of by-products that raise hazard concerns.

Accordingly, the process defined at the outset has been found, hereinafter also defined as inventive process or process according to the present invention. A process and an oligomer according to this invention are defined in the appended claims.

The inventive process comprises the following steps, hereinafter also referred to as step (a), step (b), step (c) etc. Said steps will be described in more detail below.

In step (a), a cathode active material is provided, said cathode active material being selected from layered lithium transition metal oxides, lithiated spinels, lithium transition metal phosphate with olivine structure, and lithium nickel-cobalt aluminum oxides.

Examples of layered lithium transition metal oxides are LiCoO₂, LiNiO₂, LiMnO₂, and mixed transition metal oxides with a layered structure, generally having the general formula Li_{(1+z)}[NiₐCo_{b}Mn_{c}]_{(1-z)}O₂₊ₑ wherein z is 0 to 0.3; a, b and c may be same or different and are independently 0 to 0.95 wherein a + b + c = 1; and -0.1 ≤ e ≤ 0.1. Layered lithium transition metal oxides may be non-doped or doped, for example with Ti, Al, Mg, Ca, or Ba.

Examples of lithiated transition metal phosphates are LiMnPO₄, LiNiPO₄, LiFePO₄ and LiCoPO₄, and mixed lithium transition metal phosphates containing combinations of Fe and Co or Fe and Mn or Fe and Ni instead of Fe. Lithiated transition metal phosphates may contain lithium phosphate in small amounts, for example 0.01 to 5 mole-%. Examples of lithium phosphates are Li₃PO₄ and Li₄P₂O₇.

In a preferred embodiment, lithiated transition metal phosphates are provided together with carbon in electrically conductive form, for example coated with carbon in electrically conductive form. In such embodiments, the ratio of lithiated transition metal phosphate to carbon is usually in the range of from 100:1 to 100:10, preferably 100:1.5 to 100:6. In the context of the present invention, the terms "in electrically conductive form" and "in electrically conductive polymorph" are used interchangeably.

Lithiated transition metal phosphates usually have an olivine structure.

Examples of manganese-containing are spinels like LiMn₂O₄ and spinels of general formula Li₁₊ₜM₂₋ₜO_{4-d} wherein d is 0 to 0.4, t is 0 to 0.4 and M is Mn and at least one further metal selected from the group consisting of Fe, Co, Ni, Cr, V, Mg, Ca, Al, B, Zn, Cu, Nb, Ti, Zr, La, Ce, Y or a mixture of any two or more of the foregoing. For example, M is Mn_{z}M_{(2-z)}, and z ranges from 0.25 to 1.95, preferably from 0.5 to 1.75, more preferably from 1.25 to 1.75.

Particularly preferred spinels include Li₁₊ₜMn_{(1-1 75)}Ni _{(1-0.25)}O₄.

Examples of lithium nickel cobalt aluminum oxides, preferred of them having the general formula Li_{(1+g)}[NiₕCoᵢAlⱼ]_{(1-g)}O₂. Typical values for g, h, i, and j are: g = 0 to 0.1, h = 0.8 to 0.85, i = 0.15 to 0.20, j = 0.01 to 0.05.

Preferred cathode active materials are layered lithium transition metal oxides and lithium nickel cobalt aluminum oxides. Particularly preferred examples of are layered lithium transition metal oxides are Li_{(1+z)}[Ni_{0.33}Co_{0.33}Mn_{0.33}]_{(1-z)}O₂, Li_{(1+z)}[Ni_{0.5}Co_{0.2}Mn_{0.3}]_{(1-z)}O₂, Li_{(1+z)}[Ni_{0.4}Co_{0.2}Mn_{0.4}]_{(1-z)}O₂, Li_{(1+z)}[Ni_{0.4}Co_{0.3}Mn_{0.3}]_{(1-z)}O₂, Li_{(1+z)}[Ni_{0.6}CO_{0.2}Mn_{0.2}]_{(1-z)}O₂, Li_{(1+z)}[Ni_{0.7}Co_{0.2}Mn_{0.1}]_{(1-z)}O₂, and Li_{(1+z)}[Ni_{0.8}Co_{0.1}Mn_{0.1}]_{(1-z)}O₂ wherein z is selected in each case from 0.1 to 0.25.

Cathode active material may be in particulate form. The term "particulate" in the context with cathode active materials shall mean that said material is provided in the form of particles with a maximum particle diameter not exceeding 32 µm. Said maximum particle diameter can be determined by, e. g. sieving.

In one embodiment of the present invention, the cathode active material provided in step (a) is comprised of spherical particles. Spherical particles are particles have a spherical shape. Spherical particles shall include not just those which are exactly spherical but also those particles in which the maximum and minimum diameter of at least 90% (number average) of a representative sample differ by not more than 10%.

In one embodiment of the present invention, the cathode active material provided in step (a) is comprised of secondary particles that are agglomerates of primary particles. Preferably, the cathode active material provided in step (a) is comprised of spherical secondary particles that are agglomerates of primary particles. Even more preferably, the cathode active material provided in step (a) is comprised of spherical secondary particles that are agglomerates of spherical primary particles or platelets.

In one embodiment of the present invention, the mean particle diameter (D50) of secondary particles of cathode active material provided in step (a) is in the range of from 6 to 12 µm, preferably 7 to 10 µm. The mean particle diameter (D50) in the context of the present invention refers to the median of the volume-based particle diameter, as can be determined, for example, by light scattering.

In one embodiment of the present invention, primary particles of cathode active material provided in step (a) have an average diameter in the range from 1 to 2000 nm, preferably from 10 to 1000 nm, particularly preferably from 50 to 500 nm. The average primary particle diameter can, for example, be determined by SEM or TEM. SEM is an abbreviation of scanning electron microscopy, TEM is an abbreviation of transmission electron microscopy.

In a preferred embodiment of the present invention, in step (a) a mixture of two or more different cathode active materials may be provided, for example two layered lithiated transition metal oxides with different transition metal composition, or a layered lithium transition metal oxide and a lithium nickel cobalt aluminum oxide, or two lithium nickel cobalt aluminum oxides with different composition, or a layered lithiated transition metal oxide and a lithiated spinel. Preferably, though, only one cathode active material is provided.

In step (b), the cathode active material provided in step (a) is treated with at least one oligomer that bears units according to formula (I a).

In one embodiment of the present invention, the amount of oligomer bearing units according to general formula (I a) is in the range of 0.05 to 10 % by weight, referring to the total amount of cathode active material, preferably 0.1 to 5 % by weight.

Oligomer bearing units according to general formula (I a) is hereinafter also referred to as oligomer (I). Oligomer (I) shall be described in more detail. Oligomer (I) bears units according to formula (I a) 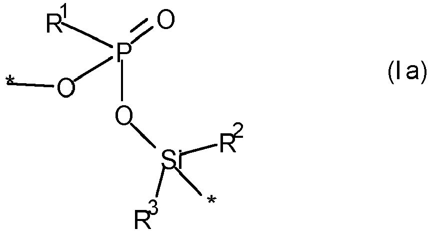 wherein
R¹ are the same or different and selected from hydrogen and C₁-C₄-alkyl, aryl, and C₄-C₇-cycloalkyl,
for example methyl, ethyl, n-propyl, iso-propyl, n-butyl, iso-butyl, tert.-butyl, preferred C₁-C₄-alkyl is methyl.

Preferably, all R¹ in oligomer (I) are the same and selected from hydrogen and methyl. Even more preferred, all R¹ are hydrogen.

R² and R³ are selected independently at each occurrence from phenyl, C₁-C₈-alkyl, C₄-C₇-cycloalkyl, C₁-C₈-haloalkyl, and OPR¹(O)-* and -(CR⁹₂)ₚ-Si(R²)₂-* wherein one or more non-vicinal CR⁹₂-groups may be replaced by oxygen, R⁹ is selected independently at each occurrence from H and C₁-C₄-alkyl, and p is a variable from zero to 6.

Examples of groups of the formula -(CR⁹₂)ₚ-Si(R²)₂-* wherein one or more non-vicinal CR⁹₂-groups may be replaced by oxygen, and p is a variable from zero to 6 are -Si(CH₃)₂-, -CH₂-Si(CH₃)₂-, -O-CH₂-CH₂-O-Si(CH₃)₂-, -CH₂-CH₂-Si(CH₃)₂-, and -C(CH₃)₂-Si(CH₃)₂-.

Phenyl may be unsubstituted or substituted with one or more C₁-C₄-alkyl groups, examples are para-methylphenyl, 2,4-dimethylphenyl, 2,6-dimethylphenyl.

Examples of C₁-C₈-alkyl and of C₄-C₇-cycloalkyl are methyl, ethyl, n-propyl, iso-propyl, n-butyl, iso-butyl, n-hexyl, n-heptyl, n-octyl, iso-octyl, cyclobutyl, cyclopentyl, cyclohexyl, cycloheptyl, preferred are n-C₁-C₄-alkyl, for example methyl, ethyl, n-propyl, iso-propyl, n-butyl, iso-butyl, tert.-butyl, preferred C₁-C₄-alkyl is methyl.

Examples of C₁-C₈-haloalkyl groups that bear at least one halogen atom, preferably fluorine or chlorine. C₁-C₈-haloalkyl may be per-halogenated, monohalogenated, or partially halogenated. Specific examples are chloromethyl, dichloromethyl, trifluoromethyl, w-chloroethyl, perfluoro-n-butyl, w-chloro-n-butyl, and -(CH₂)₂-(CF₂)₅-CF₃.

Oligomers (I) thus preferably bear sequences -O-P-O-Si-O-P-O. Consequently, they do not bear -O-P-O-P or O-P-Si-O sequences.

In oligomer (I), the overall majority of R² and R³ is selected from C₁-C₈-alkyl, for example the entire oligomer (I) bears only one group R² or R³ per molecule other than C₁-C₈-alkyl.

The average of units according to formula (Ia) per molecule is at least three, and said oligomer has a total chlorine content in the range from 1 ppm to 100ppm.

In units of formula (I a) and the like, the asterisk * is a placeholder for at least one more unit of formula (I a), or for an end-cap R⁴, or a branching, see below.

In one embodiment of the present invention, oligomer (I) is end-capped with O-R⁴ groups wherein R⁴ is selected from C₁-C₄-alkyl, preferred R⁴ is methyl. Preferably, end-capping is on the phosphorus, for example by groups according to the following formula 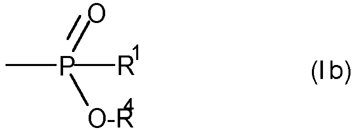 wherein and R⁴ is C₁-C₄-alkyl, especially methyl or ethyl. R¹ is as defined above.

In one embodiment of the present invention, oligomer (I) bears at least one Si-atom and at least two P-atoms per molecule.

In a preferred embodiment of the present invention, oligomer (I) bears 2 to 100 units according to general formula (I a) per molecule, preferred are 3 to 20. Such figures are to be understood as number average figures. Such number average may be determined, for example, by ¹H-NMR spectroscopy.

In one embodiment of the present invention, inventive oligomers may have one or more branchings per molecule, preferably on the silicon, for example

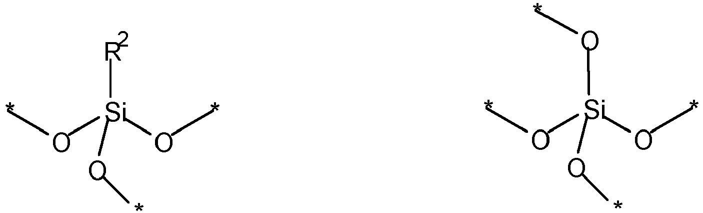

The synthesis of oligomers (I) is described in more detail further down below.

The treatment according to step (b) may be performed by slurrying cathode active material provided in step (a) in a solvent together with oligomer (I). Said solvent may be a mixture of two or more solvents. In preferred embodiments, though, in step (b) only one solvent is used. Suitable solvents for step (b) are aprotic. In the context of the present invention, "aprotic" means that a solvent does not bear a proton that can be removed with aqueous 1 M NaOH at 25°C.

Suitable solvents for step (b) are, for example, aliphatic or aromatic hydrocarbons, organic carbonates, and also ethers, acetals, ketals and aprotic amides and ketones. Examples include: n-heptane, n-decane, decahydronaphthalene, cyclohexane, toluene, ethylbenzene, ortho-, meta- and para-xylene, dimethyl carbonate, diethyl carbonate, methyl ethyl carbonate, ethylene carbonate, propylene carbonate, diethyl ether, diisopropyl ether, di-n-butyl ether, methyl tert-butyl ether, 1,2-dimethoxyethane, 1,1-dimethoxyethane, 1,2-diethoxyethane, 1,1-diethoxyethane, tetrahydrofuran (THF), 1,4-dioxane, 1,3-dioxolane, N,N-dimethylformamide, N,N-dimethylacetamide and N-methylpyrrolidone, N-ethylpyrrolidone, acetone, methyl ethyl ketone, DMSO (dimethyl sulfoxide) and cyclohexanone.

In a preferred embodiment of the present invention, the solvent used in step (b) is selected from aprotic solvents with a boiling point at normal pressure in the range of from 105 to 250°C. Examples of suitable solvents are N,N-dimethyl formamide ("DMF"), N,N-dimethyl acetamide ("DMA"), N-C₁-C₈-2-alkylpyrrolidones, for example N-methyl-2-pyrrolidone ("NMP"), N-ethyl-2-pyrrolidone ("NEP"), N-n-butyl-2-pyrrolidone, and N-C₅-C₈-2-cycloalkylpyrrolidones, for example N-cyclohexyl-2-pyrrolidone. Preferred examples are DMF, NMP and NEP.

In a preferred embodiment of the present invention, the solvent used in step (b) has a low water content, for example less than 1 % by weight, preferably 3 to 100 ppm by weight and even more preferred 5 to 50 ppm by weight.

The weight ratio of solvent to total solids may in in the ratio of 10:1 to 1:5, preferably 5:1 to 1:4. Solids in this content are cathode active material and oligomer (I), and, if applicable, carbon in electrically conductive polymorph and binder.

In one embodiment of step (b), cathode active material provided in step (a) may by slurried together with carbon in electrically conductive form. Carbon in electrically conductive form may be selected from graphite, carbon black, acetylene black, carbon nanotubes, soot, graphene or mixtures of at least two of the aforementioned substances.

In step (b), cathode active material provided in step (a) may by slurried together with one or more binders, for example one or more organic polymers like polyethylene, polyacrylonitrile, polybutadiene, polypropylene, polystyrene, polyacrylates, polyvinyl alcohol, polyisoprene and copolymers of at least two comonomers selected from ethylene, propylene, styrene, (meth)acrylonitrile and 1,3-butadiene, especially styrene-butadiene copolymers, and halogenated (co)polymers like polyvinlyidene chloride, polyvinyl chloride, polyvinyl fluoride, polyvinylidene fluoride (PVdF), polytetrafluoroethylene, copolymers of tetrafluoroethylene and hexafluoropropylene, copolymers of tetrafluoroethylene and vinylidene fluoride, and polyacrylonitrile.

Slurrying in step (b) is effected by mixing. The order of addition of the various ingredients may be chosen among a couple of options. It is preferred, though, to mix oligomer (I), as the case may be, with solvent first before introducing one or more solids.

In one embodiment of the present invention, a vessel is charged with a mixture of oligomer (I) and solvent, or oligomer (I) is dissolved in solvent. Then, cathode active material, carbon in electrically conductive polymorph and, if applicable, binder are added, preferably under stirring or shaking. Said vessel may be a stirred tank reactor or a mixing drum. In embodiment wherein a mixing drum is selected, said mixing may be effected by rotating the mixing drum.

In another embodiment of the present invention, a vessel is charged with cathode active material, carbon in electrically conductive polymorph and, if applicable, binder. Then, preferably under stirring or rotating, a solution of oligomer (I) in solvent is added.

Mixing may be effected in one or more vessels, for example in a cascade of two or more stirred tank reactors, or in a sequence of a stirred vessel and an extruder. Extruders are preferred vessels in embodiments wherein the solids content of the slurry is 80% or more. In embodiments wherein the solids content of the slurry is 70% or less, stirred tank reactors are preferred.

In one embodiment of the present invention, an additional step of mixing an oligomer bearing units according to general formulae (I a) with carbon in electrically conductive form and, optionally, a binder in the presence of an aprotic solvent but in the absence of cathode active material, said additional mixing step being performed before step (b).

In one embodiment of the present invention, cathode active material is generated simultaneously with or in the presence of carbon in electrically conductive form. This embodiment is preferred in embodiments wherein cathode active material is selected from lithiated transition metal phosphates, for example LiFePO₄ or LiCoPO₄ or LiMnPO₄. In such embodiments, in one embodiment of the present invention step (b) is performed by mixing such cathode active material - together with carbon -with solvent and oligomer (I) and, optionally, binder, and, optionally, with more carbon in electrically conductive form.

Slurrying according to step (b) may be effected at a temperature in the range of from 10 to 100°C, preferably 20 to 60°C.

Step (b) may have a duration in the range of from one minute to 10 hours, preferably two minutes to two hours, more preferably 5 minutes to one hour. It is preferred to slurry the various ingredients until a lump-free slurry has been obtained.

In one embodiment of the present invention, the duration of step (b) is in the range of from 30 seconds to 24 hours, preferably 5 minutes to 12 hours and even more preferably 30 minutes to 5 hours.

In one embodiment of the present invention, step (b) is carried out under inert gas, for example nitrogen or a noble gas such as argon. In other embodiments, step (b) is carried out under nitrogen-enriched air, for example with an oxygen content in the range of from 1 to 18% by volume.

In one embodiment of the present invention, step (b) is performed at a temperature in the range of from 5 to 200°C, preferably 10 to 100°C and even more preferably 15°C to 60°C. Heating - if required - may be effected by indirect heating. In even more embodiments, heat transfer occurs during the mixing, and cooling has to be effected. Step (b) is preferably carried out in a closed vessel to prevent evaporation of the solvent. In other embodiments, a reflux condenser is connected to the mixing device.

By and during slurrying, oligomer (I) is allowed to interact with cathode active material. Without wishing to be bound by any theory it is believed that the respective oligomer (I) reacts with free hydroxyl groups of cathode active material und thus prevents reaction of the electrolyte later on in the electrochemical cell.

In other embodiments of step (b), said treatment is performed without a solvent. Examples are dry mixing and fluidized bed treatments.

Fluidized bed treatments may be performed by fluidizing particles of cathode active material with a gas inlet stream and thus forming a fluidized bed and spraying a solution or slurry of oligomer (I) into or onto such fluidized bed.

Solvents and possible concentration of oligomer (I) in such solvent are described above.

Spraying is being performed through one or more nozzles. Suitable nozzles are, for example, high-pressure rotary drum atomizers, rotary atomizers, three-fluid nozzles, single-fluid nozzles and two-fluid nozzles, single-fluid nozzles and two-fluid nozzles being preferred. In embodiments wherein two-fluid nozzles are used the first fluid is the slurry or solution of oligomer (I), respectively, the second fluid is compressed gas, also referred to as gas inlet stream, for example with a pressure of 1.1 to 7 bar. The gas inlet stream may have a temperature in the range of from at least 25°C to 250°C, preferably 40 to 180°C, even more preferably 50 to 120°C.

The gas inlet velocity may be in the range of from 10 m/s to 150 m/s and may be adapted to the average diameter of the cathode active material to be coated.

Dry mixing may be performed without a solvent or with very small amounts, for example oligomer (I) diluted with 10 to 100 vol-% of solvent. The desired amount of oligomer, non-diluted or diluted, is then added to the respective cathode active material, and both are mixed.

Mixing may be performed in a stirred vessel, in ploughshare mixers, paddle mixers and shovel mixers. Preferred are ploughshare mixers. Preferred ploughshare mixers are installed horizontally, the term horizontal referring to the axis around which the mixing element rotates. Preferably, the inventive process is carried out in a shovel mixing tool, in a paddle mixing tool, in a Becker blade mixing tool and, most preferably, in a ploughshare mixer in accordance with the hurling and whirling principle.

In a preferred embodiment of the present invention, the inventive process is carried out in a free fall mixer. Free fall mixers are using the gravitational force to achieve mixing. In a preferred embodiment, step (b) of the inventive process is carried out in a drum or pipe-shaped vessel that rotates around its horizontal axis. In a more preferred embodiment, step (b) of the inventive process is carried out in a rotating vessel that has baffles.

By performing step (b) a treated cathode active material is obtained.

Examples of suitable solvents for fluidized bed treatments and dry mixing, if applicable, are aprotic organic solvents. Examples are aliphatic aliphatic or aromatic hydrocarbons, organic carbonates as well as ethers, acetals, ketals and aprotic amides and ketones.

Specific example include: n-heptane, n-decane, decahydronaphthalene, cyclohexane, toluene, ethylbenzene, ortho-, meta- and para-xylene, dimethyl carbonate, diethyl carbonate, methyl ethyl carbonate, ethylene carbonate, propylene carbonate, diethyl ether, diisopropyl ether, di-n-butyl ether, methyl tert-butyl ether, 1,2-dimethoxyethane, 1,1-dimethoxyethane, 1,2-diethoxyethane, 1,1-diethoxyethane, tetrahydrofuran (THF), 1,4-dioxane, 1,3-dioxolane, N,N-dimethylformamide, N,N-dimethylacetamide and N-methylpyrrolidone (NMP), N-ethylpyrrolidone (NEP), acetone, methyl ethyl ketone, dimethyl sulfoxide (DMSO) and cyclohexanone.

Steps (c) and (d) may be performed in any order.

During step (c), a slurry of treated cathode active material is applied to a current collector. Current collectors are preferably selected from films, for example metal foils or polymer films. Said polymer films may be used as transfer media. Preferred metal foils are nickel foils, titanium foils and stainless steel foils, even more preferred are aluminum films. Preferred polymer films are polyester films, for example polybutylene terephthalate films that may be untreated or treated with a silicone.

Examples of suitable solvents for step (c) are N,N-dimethyl formamide ("DMF"), N,N-dimethyl acetamide ("DMA"), N-C₁-C₈-2-alkylpyrrolidones, for example N-methyl-2-pyrrolidone ("NMP"), N-ethyl-2-pyrrolidone ("NEP"), N-n-butyl-2-pyrrolidone, and N-C₅-C₈-2-cycloalkylpyrrolidones, for example N-cyclohexyl-2-pyrrolidone. Preferred examples are DMF, NMP and NEP.

In one embodiment of the present invention, current collectors are selected from metal foils with an average thickness in the range of from 5 to 50 µm, preferably 10 to 35 µm. Even more preferred are aluminum foils with an average thickness in the range of from 5 to 50 µm, preferably 10 to 35 µm.

In one embodiment of the present invention, current collectors are selected from polymer films with an average thickness in the range of from 8 to 50 µm, preferably 12 to 35 µm. Even more preferred are polybutylene terephthalate films with an average thickness in the range of from 8 to 50 µm, preferably 12 to 35 µm. Such polymer films may serve as a precursor, and after application of the slurry and drying the cathode material is applied on a metal foil through transfer coating or transfer lamination.

In one embodiment of the present invention, the slurry is applied to the current collector by coating, spraying, or dipping the current collector into the slurry. Preferred means are a squeegee or an extruder. Extruders are preferred means for applying said slurry to the respective current collectors in embodiments wherein the solids content of the slurry is 75% or more.

In one embodiment of the present invention, slurrying of step (b) and applying said slurry to the respective current collector according to step (c) is performed with the help of the same extruder, the mixing being effected in the first part of the extruder and the applying being effected with nozzle.

In step (d) of the inventive process, the solvent used for slurrying is at least partially removed.

Removal of said solvent may be accomplished by, for example, filtration, extractive washing, distillative removal of solvent, drying and evaporation. In a preferred embodiment, all or almost all solvent, for example 99% by weight or more, is removed by evaporation.

In embodiments of evaporative removal of solvent ("evaporation"), step (d) may be performed at a temperature in the range of from 50 to 200°C. In embodiments of filtration or extractive washing, step (d) may be performed at a temperature in the range of from zero to 100°C.

In embodiments wherein step (d) is performed as distillative removal or evaporation of solvent, a pressure in the range of from 1 to 500 mbar may be applied. In embodiments of filtration or extractive washing, step (d) may be performed at ambient pressure as well.

By the inventive process, a material is obtained that exhibits excellent properties as cathode material in lithium ion batteries. Especially with respect to cell resistance increase, reduced cell resistance build-up, dispersion of conductive carbon, adhesion to current collectors and capacity fade, and stability under standard and high-voltage operation excellent properties are observed.

In one embodiment of the present invention, the inventive process may comprise one or more additional steps, for example roll compactation, for example with a calender, or by an aftertreatment, for example by dip coating.

In one embodiment of the present invention, steps (b) and (c) of the inventive process are essentially performed in reverse order by applying a slurry of a cathode active material, carbon in electrically conductive form and a binder to a current collector and by then treating such cathode with oligomer (I), for example by spraying such oligomer (I) in bulk or in solution on such cathode, or by impregnating such cathode with a solution of oligomer (I). Spraying may be performed, for example, in a spray chamber.

In one embodiment of the present invention, suitable temperature conditions for such reversed process are from ambient temperature to 100°C.

Cathode materials treated according to the inventive process may be used in lithium ion batteries with any type of electrolyte and with any type of anodes.

Anodes in lithium ion batteries usually contain at least one anode active material, such as carbon (graphite), TiO₂, lithium titanium oxide ("LTO"), silicon or tin. Anodes may additionally contain a current collector, for example a metal foil such as a copper foil, and a binder.

Electrolytes useful in lithium ion batteries may comprise at least one non-aqueous solvent, at least one electrolyte salt and, optionally, additives.

Non-aqueous solvents for electrolytes useful in lithium ion batteries may be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-C₁-C₄-alkylene glycols and in particular polyethylene glycols. Polyethylene glycols may comprise up to 20 mol% of one or more C₁-C₄-alkylene glycols. Polyalkylene glycols are preferably polyalkylene glycols having two methyl or ethyl end caps.

The molecular weight M_{w} of suitable polyalkylene glycols and in particular suitable polyethylene glycols can be at least 400 g/mol. The molecular weight M_{w} of suitable polyalkylene glycols and in particular suitable polyethylene glycols can be up to 5,000,000 g/mol, preferably up to 2,000,000 g/mol.

Examples of suitable non-cyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable non-cyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable non-cyclic organic carbonates are dimethyl carbonate, ethyl methyl carbonate and diethyl carbonate. Examples of suitable cyclic organic carbonates are compounds of the general formulae (II) and (III) 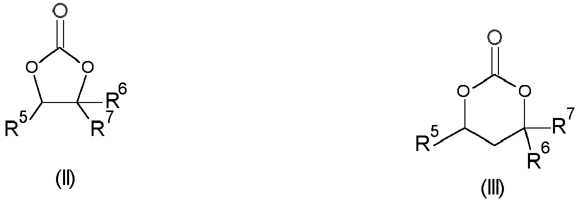 where R⁵, R⁶ and R⁷ can be identical or different and are selected from among hydrogen and C₁-C₄-alkyl, for example methyl, ethyl, n-propyl, isopropyl, n-butyl, isobutyl, sec-butyl and tert-butyl, with R⁵ and R⁶ preferably not both being tert-butyl. In a further embodiment of the present invention, R⁵ may be fluorine and R⁶ and R⁷ can be identical or different and are selected from among hydrogen and C₁-C₄-alkyl.

In particularly preferred embodiments, R⁵ is methyl and R⁶ and R⁷ are each hydrogen, or R⁵, R⁶ and R⁷ are each hydrogen.

Another preferred cyclic organic carbonate is vinylene carbonate, formula (IV).

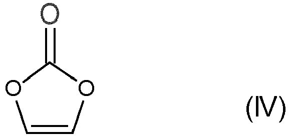

Further examples are γ-butyrolactone and fluorinated ethers.

The solvent or solvents is/are preferably used in the water-free state, i.e. with a water content in the range from 1 ppm to 0.1% by weight, which can be determined, for example, by Karl-Fischer titration.

Electrolytes useful in lithium ion batteries further comprise at least one electrolyte salt. Suitable electrolyte salts are, in particular, lithium salts. Examples of suitable lithium salts are LiPF₆, LiBF₄, LiClO₄, LiAsF₆, LiCF₃SO₃, LiC(CₙF₂ₙ₊₁SO₂)₃, lithium imides such as LiN(CₙF₂ₙ₊₁SO₂)₂, where n is an integer in the range from 1 to 20. Further examples are LiN(SO₂F)₂, Li₂SiF₆, LiSbF₆, LiAlCl₄ and salts of the general formula (CₙF₂ₙ₊₁SO₂)ₜYLi, wherein n is defined as above and t is defined as follows:
t = 1, when Y is selected from among oxygen and sulfur,
t = 2, when Y is selected from among nitrogen and phosphorus, and
t = 3, when Y is selected from among carbon and silicon.

Preferred electrolyte salts are selected from among LiC(CF₃SO₂)₃, LiN(CF₃SO₂)₂, LiPF₆, LiBF₄, LiClO₄, with particular preference being given to LiPF₆ and LiN(CF₃SO₂)₂.

By performing the inventive process, cathodes are obtained that show excellent cycling behavior. Especially with respect to cell resistance increase, reduced cell resistance build-up, dispersion of conductive carbon, adhesion to current collectors and capacity fade, and stability under standard and high-voltage operation excellent properties are observed.

A further aspect of the present invention relates to oligomers bearing units according to formula (I a) 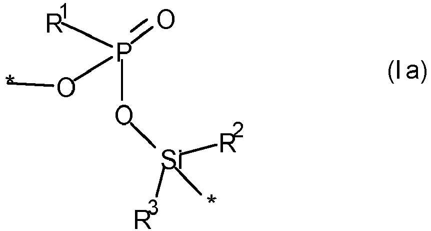 wherein
R¹ are the same or different and selected from hydrogen and C₁-C₄-alkyl, aryl, and C₄-C₇-cycloalkyl,
R² and R³ are selected independently at each occurrence from phenyl and C₁-C₈-alkyl, C₄-C₇-cycloalkyl, C₁-C₈-haloalkyl, OPR¹(O)-*, and -(CR⁹₂)ₚ-Si(R²)₂-* wherein one or more non-vicinal CR⁹₂-groups may be replaced by oxygen, R⁹ is selected independently at each occurrence from H and C₁-C₄-alkyl, and p is a variable from zero to 6,
and wherein the overall majority of R² and R³ is selected from C₁-C₈-alkyl,
wherein the average of units according to formula (I a) per molecule is at least three.

Such oligomers are hereinafter also referred to as inventive oligomers or as oligomers according to the (present) invention.

In one embodiment of the present invention, inventive oligomer is end-capped with O-R⁴ groups wherein R⁴ is selected from C₁-C₄-alkyl.

### Specifically,

R¹ are the same or different and selected from hydrogen and C₁-C₄-alkyl, for example methyl, ethyl, n-propyl, iso-propyl, n-butyl, iso-butyl, tert.-butyl, preferred C₁-C₄-alkyl is methyl.

Preferably, all R¹ in oligomer (I) are the same and selected from hydrogen and methyl. Even more preferred, all R¹ are hydrogen.

R² and R³ are selected independently at each occurrence from
Phenyl,
C₁-C₈-alkyl, for example phenyl, methyl, ethyl, n-propyl, iso-propyl, n-butyl, iso-butyl, n-hexyl, n-heptyl, n-octyl, iso-octyl, preferred are n-C₁-C₄-alkyl, for example methyl, ethyl, n-propyl, iso-propyl, n-butyl, iso-butyl, tert.-butyl, preferred C₁-C₄-alkyl is methyl.
C₄-C₇-cycloalkyl, cycylobutyl, cyclopentyl, cyclohexyl, cycloheptyl,
C₁-C₈-haloalkyl groups that bear at least one halogen atom, preferably fluorine or chlorine, for example per-halogenated, monohalogenated, or partially halogenated C₁-C₈-haloalkyl. Specific examples are chloromethyl, dichloromethyl, trifluoromethyl, ω-chloroethyl, perfluoro-n-butyl, ω-chloro-n-butyl, and -(CH₂)₂-(CF₂)₅-CF₃,
OPR¹(O)-*, as defined above,
and -(CR⁹₂)ₚ-Si(R²)₂-* wherein one or more non-vicinal CR⁹₂-groups may be replaced by oxygen, R⁹ is selected independently at each occurrence from C₁-C₄-alkyl and particularly H, and p is a variable from zero to 6, especially 2 to 4.

In formula -(CR⁹₂)ₚ-Si(R²)₂-*, it is particularly preferred that all R⁹ are hydrogen.

Inventive oligomers thus preferably bear sequences -O-P-O-Si-O-P-O. Consequently, they do not bear O-P-O-P or O-P-Si-O sequences.

In inventive oligomers the overall majority of R² and R³ is selected from C₁-C₈-alkyl, for example the entire inventive oligomer bears only one group R² or R³ per molecule other than C₁-C₈-alkyl. In one embodiment of the present invention, inventive oligomers may have one or more branchings per molecule, preferably on the silicon, for example

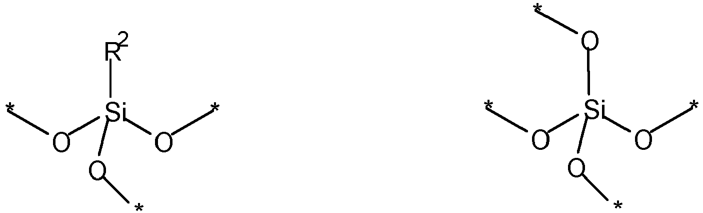

In one embodiment of the present invention, inventive oligomers are end-capped with O-R⁴ groups wherein R⁴ is selected from C₁-C₄-alkyl, preferred R⁴ is methyl. End-capping may be on the silicon but preferably, end-capping is on the phosphorus, for example by groups according to the following formula (I b) 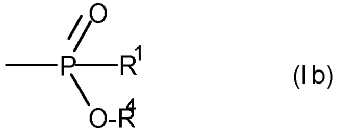 wherein R⁴ is C₁-C₄-alkyl, especially methyl or ethyl. R¹ is as defined above.

Preferred end-cappings are groups according to general formula (I b).

In a preferred embodiment, R¹ is selected from hydrogen and methyl and all R² and R³ are methyl.

Preferably, inventive oligomers bear two to 100 units according to general formula (I a) per molecule, preferably 2 to 20 and even more preferably 3 to 8. Such figures are to be understood as average figures and refer to the number average. Inventive oligomers are well suited to manufacture inventive cathodes.

Inventive oligomers may be manufactured by reacting at least one compound according to general formula (V) with at least one silicon compound according to general (VI): 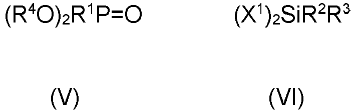
wherein R⁴ are same or different C₁-C₄-alkyl, especially methyl or ethyl, and
wherein R¹ are the same or different and selected from hydrogen and C₁-C₄-alkyl, for example methyl, ethyl, n-propyl, iso-propyl, n-butyl, iso-butyl, tert.-butyl, preferred C₁-C₄-alkyl is methyl.

X¹ are same or different and selected from Cl, Br, O-COR⁸ and O-R⁸, with R⁸ being selected from C₁-C₄-alkyl. Preferred R⁸ are methyl or ethyl. Even more preferred, all X¹ are Cl.

In embodiments wherein the introduction of a spacer is desired, such spacers may be introduced by adding one or more compounds according to general formula X¹-Si(R²)₂-(CR⁹₂)ₚ-Si(R²)₂-X¹, wherein p is as defined above, and wherein in (CR⁹₂) one or more non-vicinal CR⁹₂-groups may be replaced by oxygen. One example is X¹-Si(R²)₂-O-Si(R²)₂-X¹, particularly ClSi(CH₃)₂OSi(CH₃)₂Cl.

In embodiments where the introduction of branching is desired, further reactants such as (X¹)₃SiR² or Si(X¹)₄ may be added.

In one embodiment of the present invention, inventive oligomers have a dynamic viscosity in the range of from 10 mPa·s to 10,000 mPa s, preferably 20 mPa·s to 5,000 mPa s, more preferably 50 mPa·s to 2,500 mPa s, in each case determined at 20°C.

Inventive oligomers have a chlorine content in the range of from 1 to 100 ppm, preferably 2 to 50 ppm, determined gravimetrically as AgCl.

A further aspect of the present invention relates to the manufacture of inventive oligomers (I), hereinafter also referred to as inventive manufacturing process. Inventive oligomers may be manufactured by reacting at least one compound according to general formula (V) with at least one silicon compound according to general (VI). In the course of such reaction inventive oligomers are formed and X¹-R⁴ is cleaved off. The inventive manufacturing process may be performed under heating or cooling. Depending on the formula - and thus on the boiling point - of X¹-R⁴ the temperature of the cooler is adjusted in a way that a part of X¹-R⁴ is distilled off and a part of it is returned to the reaction vessel. For example, when X¹-R⁴ is CH₃Cl it is advantageous to maintain the cooler temperature in the range of from -25°C to +25°C, preferably from -10°C to +15°C. When X¹-R⁴ is C₂H₅Cl it is advantageous to maintain the cooler temperature in the range of from -20°C to + 30°C.

In embodiments wherein an excess of compound of general formula (VI) is applied mainly dimers are obtained.

The manufacture of inventive oligomers may be performed in an aprotic solvent. Suitable solvents for the manufacture of inventive oligomers are, for example, aliphatic or aromatic hydrocarbons, organic carbonates, and also ethers, acetals, ketals and aprotic amides and ketones. Examples include: n-heptane, n-decane, decahydronaphthalene, cyclohexane, toluene, ethylbenzene, ortho-, meta- and para-xylene, dimethyl carbonate, diethyl carbonate, methyl ethyl carbonate, ethylene carbonate, propylene carbonate, diethyl ether, diisopropyl ether, di-n-butyl ether, methyl tert-butyl ether, 1,2-dimethoxyethane, 1,1-dimethoxyethane, 1,2-diethoxyethane, 1,1-diethoxyethane, tetrahydrofuran (THF), 1,4-dioxane, 1,3-dioxolane, N,N-dimethylformamide, N,N-dimethylacetamide and N-methylpyrrolidone, N-ethylpyrrolidone, acetone, methyl ethyl ketone, and cyclohexanone.

In a preferred embodiment of the present invention, though, the manufacture of inventive oligomers is performed in bulk, thus, without solvent.

In one embodiment of the present invention, the manufacture of inventive oligomers is performed at a pressure in the range of from 100 mbar to 10 bar. Normal pressure - 1013 mbar - is preferred.

Preferably, inventive oligomers are used without purification steps.

The present invention is further illustrated by working examples.

### I. Synthesis

### General remarks:

All compounds were analyzed using ¹H NMR spectroscopy and ³¹P NMR spectroscopy directly after preparation. Samples were prepared and measured under inert atmosphere using CDCl₃ (7.26 ppm) as a reference; when inventive oligomers were analyzed screw-cap NMR tubes were used equipped with an inner tube filled with C₆D₆ as reference (7.16 ppm). The spectra were recorded on a Bruker Avance III equipped with a CryoProbe Prodigy probe head or on a Varian NMR system 400 operating at a frequency of ¹H: 500.36 MHz, ³¹P: 202.56 MHz. ³¹P NMR data were collected for the sake of clarity decoupled from proton: {1 H}. The relaxation time D1 for ³¹P NMR measurements was increased to 60 sec to determine the quantities of each P-species accordingly. MNova software was used to analyze the spectra.

For calculating Mₙ of inventive oligomers, the signal of the end caps in the ³¹P-NMR spectrum (quantitatively measured with a relaxation time D1 = 60 s) was set to 2. In consequence, the signals of the repeating units yield the number n of the repeating units. The number average molecular weight is calculated by adding the molecular weight of the termination groups, n x the molecular weight of the repeating unit and the molecular weight of the additional CH₃)₂SiO₂-unit.

For viscosity measurements an Anton Paar Physica MCR 51 was used. Measurements were conducted at 20°C with shear stress profile from 10 to 1000 s⁻¹ and averages were calculated.

Reaction yields were calculated based on the difference of the amount of starting materials, the released amount of alkyl chloride and the weight of obtained oligomer.

### 1.1 Overview of starting materials

| | | |
|---|---|---|
| 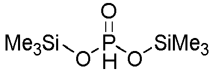 | 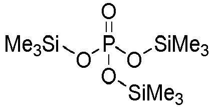 | 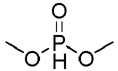 |
| (V.1) | (V.2) | (V.3) |

| | | |
|---|---|---|
| 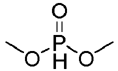 | 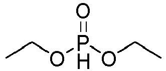 | 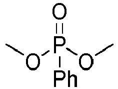 |
| (V.4) | (V.5) | (V.6) |

### I.2 Synthesis of inventive oligomers and of comparative compounds

Comparative example 1: Dimethylphosphite (V.3) = 1.4 mPa·s
Comparative example 2: bis(trimethylsilyl)phosphite (C1), dynamic viscosity: 2.3 mPa·s
Comparative example 3: tris(trimethylsilyl)phosphate (C2), dynamic viscosity: 4.3 mPa·s
Inventive oligomer (I.1): dynamic viscosity: 170 mPa·s
Inventive oligomer (I.4): dynamic viscosity: 12 mPa·s

A summary of exemplified inventive oligomers is shown in Table 1.

### Experiment 1 - inventive oligomer (I.1):

A 250-ml three-necked flask with reflux condenser was charged with 88.0 g (1.0 eq, 800 mmol) dimethylphosphite (V.3). At room temperature, 104.8 g Me₂SiCl₂ ((VI.1), 1.0 eq, 800 mmol) were added, then heated under stirring to 90°C and stirred for one hour until the formation of methyl chloride has ceased. The cooler temperature was 20°C. The flask with formed colorless residue was equipped with a distillation bridge and heated (1h, 100°C, 0.2 mbar) to yield inventive oligomer (I.1) with an average molecular weight Mₙ of 957 g/mol as a colorless oil (105 g, 95% yield; chloride content 55 ppm).

Inventive oligomer (I.1) may be divided theoretically into different units: two P-containing termination groups [2 x CH₃OP(O)H-, together 158.03 g/mol], n Si- and P-containing repeating units [n x (CH₃)₂SiO₂P(O)H-unit, 138.14 g/mol per unit] and one additional (CH₃)₂SiO₂-unit (90.15 g/mol) according to the following structure: 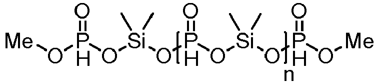 with Me = CH₃.

For calculating the number average molecular weight, the signal of the termination groups in the ³¹P-NMR spectrum (quantitatively measured with a relaxation time D1 = 60 s) was set to 2 (signals with a chemical shift at -2.5 ppm). In consequence, the signals of the repeating units yield the number n of the repeating units (integral of signals with a chemical shift in the region from -14 to -17.5 ppm). The number average molecular weight is calculated by adding the molecular weight of the termination groups, n x the molecular weight of the repeating unit and the molecular weight of the additional CH₃)₂SiO₂-unit.

### Dynamic Viscosity: 170 mPa·s

### Experiment 2 - inventive oligomer (I.2):

Following the conditions described in experiment 1, Me₂SiCl₂ (0.9 eq, 765 mmol, 98.7 g), MeSiCl₃ (0.1 eq, 85 mmol, 12.7 g) and dimethylphosphite (1.0 eq, 850 mmol, 93.5 g, (V.3)) were converted to yield inventive oligomer (I.2) (95.0 g, 87% yield). The chemical shifts for the termination and repeating unit in the ³¹P NMR spectrum were in the same range as in experiment 1.

### Dynamic viscosity: 180 mPa·s

### Experiment 3 - inventive oligomer (I.3):

Following the conditions described in experiment 1, Me₂SiCl₂ (0.9 eq, 72 mmol, 9.47 g), SiCl₄ (0.1 eq, 8 mmol, 1.4 g) and dimethylphosphite (1.0 eq, 80 mmol, 8.8 g, (V.3)) were converted to yield inventive oligomer (I.3). The chemical shifts for the termination and repeating unit in the ³¹P NMR spectrum were in the same range as in experiment 1.

### Experiment 4 - inventive oligomer (I.4):

Following the conditions described in experiment 1, Me₂SiCl₂ (4.0 eq, 320 mmol, 4,.30 g), and dimethylphosphite (1.0 eq, 80 mmol, 8.80 g, (V.3)) were converted to yield inventive oligomer (!.4) (5.00 g, 44% yield). The chemical shifts for the termination and repeating unit in the ³¹P NMR spectrum were in the same range as in experiment 1.

### Dynamic viscosity: 12 mPa·s

### Experiment 5 - inventive oligomer (I.5):

Following the conditions described in experiment 1, Me₂SiCl₂ (1.0 eq, 70 mmol, 9.12 g) and dimethyl methylphosphonate (1.0 eq, 70 mmol, 8.95 g, (V.4)) were converted to yield inventive oligomer (I.5) (9.80 g, 92% yield). The chemical shift for the repeating unit was in the region from 8 to 12 ppm and the termination at 21 to 23 ppm in the ³¹P NMR spectrum.

### Experiment 6 - inventive oligomer (I.6):

Following the conditions described in experiment 1, Me₂SiCl₂ (1.0 eq, 50 mmol, 6.45 g) and diethylphosphite (1.0 eq, 50 mmol, 7.12 g, (V.5)) were converted to yield inventive oligomer (!.6) (3.80 g, 53% yield). The chemical shift for the repeating unit was in the region from -14 to -17.5 ppm and the termination at -4.2 ppm in the ³¹P NMR spectrum.

### Experiment 7 - inventive oligomer (!.7):

Following the conditions described in experiment 1, Me₂SiCl₂ (1.0 eq, 70 mmol, 9.17 g) and dimethyl phenylphosphonate (1.0 eq, 70 mmol, 13.30 g, (V.6)) were converted to yield inventive oligomer (!.7) (13,6 g, 88% yield). Inventive oligomer (I.7) had an average molecular weight Mₙ of 753 g/mol and a dynamic viscosity of 1520 mPa s. The chemical shift for the repeating unit was in the region from -0.2 to -2.5 ppm and the termination at 10.4 ppm in the ³¹P NMR spectrum.

Mₙ = 753 g/mol was determined by ³¹P NMR as discussed for experiment 1 except that the values for the termination groups [2 ·CH₃OP(O)H-, sum: 310.24 g/mol], n Si- and P-containing repeating units [n ·(CH₃)₂SiO₂P(O)H-unit, 214.25 g/mol per unit] and one additional (CH₃)₂SiO₂-unit (90.15 g/mol) according to the structure of I.7 were used.

### Dynamic viscosity: 1520 mPa·s

### Experiment 8 - inventive oligomer (1.8):

Following the conditions described in experiment 1, Et₂SiCl₂ (1.0 eq, 70 mmol, 7.86 g) and dimethylphosphite (1.0 eq, 70 mmol, 11.34 g, (V.3)) were converted to yield inventive oligomer (1.8) (15.3 g, 98% yield). The chemical shift for the repeating unit was in the region from -14 to - 17.5 ppm and the termination at -4.2 ppm in the ³¹P NMR spectrum.

### Experiment 9

Following the conditions described in experiment 1, ClMe₂SiOSiMe₂Cl (1.0 eq, 80 mmol, 6.45 g) and dimethylphosphite (1.0 eq, 80 mmol, 9.00 g, (V.3)) were converted to yield inventive oligomer (I.9) (15.40 g, 87% yield). The chemical shift for the repeating unit was in the region from - 15 to -17.5 ppm and the termination at -2.7 ppm in the ³¹P NMR spectrum.

Inventive oligomers I.2 to I.9 were manufactured and analyzed as described in experiment 1 with the educts, ratios of educts and reaction conditions listed in Table 1. The composition of the mixtures obtained is also shown in Table 1.

**Table 1: inventive oligomers**

| Oligomer | Molar ratio of starting materials | additional component [eq.] | Conditions | End-caps to repeating units |
|---|---|---|---|---|
| (I.1) | 1:1 (V.3): Me₂SiCl₂ | - | 90°C, 60 min | 27:73 |
| (I.2) | 1:0.9 (V.3): Me₂SiCl₂ | 0.1 (MeSiCl₃) | 90°C, 60 min | 36:64 |
| (I.3) | 1:0.9 (V.3): Me₂SiCl₂ | 0.1 (SiCl₄) | 90°C, 60 min | 20:80 |
| (I.4) | 1:4 (V.3): Me₂SiCl₂ | - | 90°C, 60 min | 88:12 |
| (I.5) | 1:1 (V.4): Me₂SiCl₂ | - | 90°C, 60 min | 30:70 |
| (I.6) | 1:1 (V.5): Me₂SiCl₂ | - | 90°C, 60 min | 82:18 |
| (I.7) | 1:1 (V.6): Me₂SiCl₂ | - | 90°C, 60 min | 56:44 |
| (I.8) | 1:1 (V.3): Et₂SiCl₂ | - | 90°C, 60 min | 91:9 |
| (I.9) | 1:1 (V.3): ClSiMe₂OSiMe₂Cl | - | 90°C, 60 min | 19:81 |

| | | | | |
|---|---|---|---|---|
| Me: CH₃, Et: CH₂CH₃ | | | | |

### I.3 Studies on the cooling temperature influence

### Experiment 10:

In a trace-heated 250-mL stirred glass vessel equipped with 4-bladed pitched-blade turbine, an intense cooler (length 40 cm, 10°C) regulated by a thermostat, thermometer for the reaction as well as for the off-gas control was added under inert atmosphere Me₂SiCl₂ (1.0 eq, 1 mol, 131.0 g) to dimethylphosphite (1.0 eq, 1 mol, 112.3 g, (V.3)) at 25°C. The colorless, clear mixture was stepwisely heated to 90°C within 90 min and kept at this temperature for 30 min. The reaction mixture was cooled down to RT, the cooler was replaced by a distillation bridge and all volatiles were removed (90°C, 1h, 0,5 mbar) to yield inventive oligomer !.10 as a clear oil (134,6 g, 97% yield; chloride content 15 ppm) with a dynamic viscosity of 243 mPa·s. ³¹P NMR analysis revealed a ratio of termination to repeating units of 21 to 79.

### Experiment 11:

Following the conditions described in experiment 10 the cooling temperature was set to 25°C instead of 10°C to yield inventive oligomer !.11 (126,9 g, 91% yield) with a dynamic viscosity of 49 mPa·s and a ratio of termination to repeating units of 44 to 56 based on ³¹P NMR analysis.

### Experiment 12:

Following the conditions described in experiment 13 the cooling temperature was set to -10°C instead of +10°C to yield inventive oligomer I.12 (135,6 g, 95% yield) with a dynamic viscosity of 590 mPa·s and a ratio of termination to repeating units of 13 to 87 based on ³¹P NMR analysis.

### I.4 Manufacture of inventive cathode active materials

For wet-coating of cathode material with silyl-H-phosphonates, a Büchi glass oven for micro distillation, B-585 equipped with a rotation drying flask (30 mL) at 30 rpm (rounds per minute) was used.

### Steps (a.1) and (a.2):

The following pristine cathode active materials were used:
0.42Li₂MnO₃ · 0.58Li(Ni_{0.4}Co_{0.2}Mn_{0.4})O₂ (A.1). The overall formula was
Li_{1.21}(Ni_{0.23}Co_{0.12}Mn_{0.65})_{0.79}O_{2.06}. D50: 9.62 µm, LASER diffraction in a Mastersize 3000 instrument from Malvern Instruments
Li_{1.03}(Ni_{0.6}Co_{0.2}Mn_{0.2})_{0.97}O₂ (A.2). D50: 10.8 µm, LASER diffraction in a Mastersize 3000 instrument from Malvern Instruments.

### Experiment I.4.1/Step (b.1):

The flask of the Büchi glass oven was charged with an amount of 25 g (A.1) under inert atmosphere. A solution of inventive oligomer (I.1) (0.25 g, 1 wt.%) in 40 mL dry dichloromethane was added and allowed to interact at 25°C for 45 min. Then the Büchi glass oven was heated to 50°C at reduced pressure (400 mbar and 30 rpm) to obtain a fine particulate solid after complete evaporation of the solvent and drying at 0.1 mbar for one hour. Inventive CAM.1 was obtained.

### Experiment I.4.2/Step (b.2):

Experiment I.4.1 was repeated but with 40 mL of dried THF instead of dichloromethane. Inventive CAM.2 was obtained.

### Experiment I.4.3/Step (b.3):

Experiment I.4.1 was repeated but with 40 mL of dried ethyl acetate instead of dichloromethane. Inventive CAM.3 was obtained.

### Experiment I.4.4/Step (b.4):

Experiment I.4.1 was repeated but with 40 mL of dried acetone instead of dichloromethane. Inventive CAM.4 was obtained.

### Experiment I.4.5/Step (b.5):

Experiment I.4.4 was repeated but with 0.125 g of inventive oligomer (I.2) instead of (I.1) (0.5 wt.%) was used. Inventive CAM.5 was obtained.

### Experiment I.4.6/Step (b.6):

Experiment I.4.4 was repeated but with 0.063 g of inventive oligomer (I.2) instead of (!.1) (0.25 wt.%) was used. Inventive CAM.6 was obtained.

### Comparative experiment I.4.7/Step C-(b.7):

Experiment I.4.4 was repeated but without any inventive oligomer. C-CAM.7 was obtained.

### Experiment I.4.8/Step (b.8):

The flask of the Büchi glass oven was charged an amount of 25 g (A.2) under inert atmosphere. A solution of inventive oligomer (I.2) (0.025 g, 0.1 wt.%) in 40 mL dry acetone was added and allowed to interact at 25°C for 45 min. Then the Büchi glass oven was heated to 50°C at reduced pressure (400 mbar) to obtain a fine particulate solid after complete evaporation of the solvent and drying at 0.1 mbar for one hour. Inventive CAM.8 was obtained.

### Experiment I.4.9/Step (b.9):

Experiment I.4.4 was repeated but with 0.125 g of inventive oligomer (I.2) (0.5 wt.%) was used. Inventive CAM.9 was obtained.

### Comparative Experiment I.4.10/Step C-(b.10):

Experiment I.4.8 was repeated but without any inventive oligomer. C-CAM.10 was obtained.

### I.5 Dry-coating Procedure

For an alternative way of treating cathode active material with inventive oligomer, a rotating and tilted mixing pan with an eccentrically arranged mixing tool - commercially available as Eirich laboratory mixer EU5 equipped with a pin-type rotor - was used. Mixing speed was 300 rpm, inclination was 20°, the inert atmosphere was argon unless indicated otherwise.

### Comparative Experiment I.5.1/Step C-(b.11)

Under inert atmosphere, the mixing chamber of the Erich laboratory mixer EU5 was charged with 417 g of cathode material powder (A.1). Mixing was started (300 rpm, at 25°C) and immediately thereafter, 12.0 g dry acetone were added during 1 min, then mixing was resumed at 5000 rpm for 4 min. C-CAM.11 was obtained.

### ICP measurements: P < 0.03%; Si < 0.03% (below detection level)

### Experiment I.5.2/Step (b.12):

Under inert atmosphere, the mixing chamber of the Erich laboratory mixer EU5 was charged with 452 g of cathode active material (A.1). Mixing was started (300 rpm, at 25°C) and immediately thereafter, 2.3 g inventive oligomer (I.2) (0.5 wt.%) in 10.4 g of dry acetone were added during 1 min, then mixing was resumed at 5000 rpm for 4 min. Inventive CAM.12 was obtained.

### ICP measurements: P = 0.11%; Si =0.07%

### Experiment I.5.3/Step (b.13):

Under inert atmosphere, the mixing chamber of the Erich laboratory mixer EU5 was charged with 428 g of cathode active material (A.1). Mixing was started (300 rpm, at 25°C) and immediately thereafter, 4.3 g of inventive oligomer (I.2) (1.0 wt.%) in 8.6 g of dry acetone were added during 1 min, then mixing was resumed at 5000 rpm for 4 min. Inventive CAM.13 was obtained.

### ICP measurements: P = 0.21%; Si = 0.11%

### Comparative Experiment I.5.4/Step C-(b.14)

Under inert atmosphere, the mixing chamber of the Erich laboratory mixer EU5 was charged with 496 g of cathode active material (A.2). Mixing was started (300 rpm, at 25°C) and immediately thereafter, 20.7 g of dry acetone were added during 1 min, then mixing was resumed at 5000 rpm for 4 min. C-CAM.14 was obtained.

### ICP measurements: P < 0.03%; Si < 0.03% (below detection level).

### Experiment I.5.5/Step (b.15):

Under inert atmosphere, the mixing chamber of the Erich laboratory mixer EU5 was charged with 497 g of cathode active material (A.2). Mixing was started (300 rpm, at 25°C) and immediately thereafter, 1.3 g of inventive oligomer (I.2) (0.25 wt.%) in 7.9 g of dry acetone were added during 1 min, then mixing was resumed at 5000 rpm for 4 min. Inventive CAM.15 was obtained.

### ICP measurements: P = 0.05%; Si =0.04%

### Experiment I.5.6/Step (b.16):

Under inert atmosphere, the mixing chamber of the Erich laboratory mixer EU5 was charged with 513 g of cathode active material (A.2). Mixing was started (300 rpm, at 25°C and immediately thereafter, 2.6 g of inventive oligomer (I.2) (0.5 wt.%) in 5.2 g of dry acetone were added during 1 min, then mixing was resumed at 5000 rpm for 4 min. Inventive CAM.16 was obtained.

### ICP measurements: P = 0.11%; Si =0.07%

**Table X1. Inventive cathode active materials employed**

| Cathode Active Material | Based upon | Experiment No. |
|---|---|---|
| (A.2) (Comparative Example) | A.2 (Pristine) | - |
| CAM.1 (Inventive Example) | A.1 | I.4.1/Step (b.1) |
| CAM.2 (Inventive Example) | A.1 | I.4.2/Step (b.2) |
| CAM.3 (Inventive Example) | A.1 | I.4.3/Step (b.3) |
| CAM.4 (Inventive Example) | A.1 | I.4.4/Step (b.4) |
| CAM.5 (Inventive Example) | A.1 | I.4.5/Step (b.5) |
| CAM.6 (Inventive Example) | A.1 | I.4.6/Step (b.6) |
| C-CAM.7 (Comparative Example) | A.1 | I.4.7/Step (b.7) |
| CAM.8 (Inventive Example) | A.2 | I.4.8/Step (b.8) |
| CAM.9 (Inventive Example) | A.2 | I.4.9/Step (b.9) |
| C-CAM.10 (Comparative Example) | A.2 | I.4.10/Step (b.10) |

### II. Manufacture of inventive cathodes

The positive electrodes for the electrochemical cycling experiments for the cathode active materials presented in Table X1 were prepared according based on the compositions presented in table X2. Such components, besides the cathode active material, are polyvinylidene fluoride (PVdF) binder, conductive additives such as active carbon (Super C65 L purchased form Timcal) and graphite (SFG6L from Timcal). The proportions into which these components are mixed are dependent on the cathode active material used and are presented in Table X2. Typically, all of the slurries were prepared on the basis of 20 g of cathode active material and the amount of NEP employed was such that the total solid content (CAM + SuperC65 L + SFG6L) was in the region from 59 to 62 %. Additionally, in some selected cases, inventive oligomer (I.1) or (!.2) was added during the slurry preparation, see Table X2 in weight percent respect to the total amount of cathode active material present in the slurry. The components are mixed in the following order:
Step (c.1): In a planetary mixer (2000 rpm), a given amount of N-ethyl pyrrolidone (NEP), binder (PVdF) and inventive oligomer (I.1) or (I.2), if applicable, were added according to Table X2 and mixed in a for 3 minutes or until both components are fully dissolved. To the solution so obtained Super C65L and SFG6L were added according to Table X2 and mixed in a planetary mixer (2000 rpm) for 15 minutes or until a slurry with lump-free appearance was obtained. 20 g of CAM obtained according to I.4 were added. The resultant slurry was mixed again in a planetary mixer (2000 rpm) for 15 minutes or until a slurry with lump-free appearance was obtained.
Step (d.1): The slurry obtained from step (c.1) was applied to a 20 µm-thick aluminum foil with the help of a doctor blade. A loaded aluminum foil was thus obtained.
Step (e.1): The loaded aluminum foil from step (d.1) was dried under vacuum for 20 hours in a vacuum oven at 120 °C. After cooling to room-temperature the electrodes were calendared and punched out in 14 mm-diameter disks. The resulting electrodes were then weighed, dried again at 120 °C under vacuum and introduced into an argon-filled glovebox.

Resultant inventive cathode tapes are summarized in Table X2.

**Table X2. Proportion of the components employed for the preparation of cathode tapes**

| Cathode el | PVdF Binder (w. %) | Super C65 (w. %) | Graphite SFG6 (w. %) | CAM (w. %) | CAM | Inventive oligomer | oligomer concentration [%]* |
|---|---|---|---|---|---|---|---|
| C-CT.1 | 3 | 1 | 2 | 94 | A.2 | - | - |
| CT.2 (Inventive) | 3 | 1 | 2 | 94 | A.2 | (I.2) | 0.1 |
| CT.3 (Inventive) | 3 | 1 | 2 | 94 | A.2 | (I.2) | 0.5 |
| CT.4 (Inventive) | 3 | 1 | 2 | 94 | CAM.8 | - | - |
| CT.5 (Inventive) | 3 | 1 | 2 | 94 | CAM.9 | - | - |
| C-CT.6 | 3.5 | 2 | 2 | 92.5 | A.1 | - | - |
| CT.7 (Inventive) | 3.5 | 2 | 2 | 92.5 | A.1 | (!.1) | 1 |
| CT.8 (Inventive) | 3.5 | 2 | 2 | 92.5 | A.1 | (I.2) | 1 |
| C-CT.9 | 3.5 | 2 | 2 | 92.5 | A.1 | (V.1) | 1 |
| C-CT.10 | 3.5 | 2 | 2 | 92.5 | C-CAM.7 | - | - |
| CT.11 (Inventive) | 3.5 | 2 | 2 | 92.5 | CAM.1 | - | - |
| CT.12 (Inventive) | 3.5 | 2 | 2 | 92.5 | CAM.2 | - | - |
| CT.13 (In-ventive) | 3.5 | 2 | 2 | 92.5 | CAM.3 | - | - |
| CT.14 (Inventive) | 3.5 | 2 | 2 | 92.5 | CAM.4 | - | - |
| CT.15 (Inventive) | 3.5 | 2 | 2 | 92.5 | CAM.5 | - | - |
| CT.16 (Inventive) | 3.5 | 2 | 2 | 92.5 | CAM.6 | - | - |

| | | | | | | | |
|---|---|---|---|---|---|---|---|
| In comparative example 9, bis-trimethylsily phosphonate (V.1) was added *: % by weight referring to CAM | | | | | | | |

### III. Manufacture of full coin cells

The positive electrodes containing NCM-622 for the electrochemical cycling experiments, prepared as described above, and commercial graphite-coated tapes from Elexcel Corporation Ltd. were used as negative electrodes. The positive, negative composite electrodes, a polypropylene separator (Celgard) and the respective electrolyte were used to manufacture 2032 coin cells. All cells were assembled in an argon-filled glove box having oxygen and water levels below 1.0 ppm and their electrochemical testing carried out in a Maccor 4000 battery-test system.

For full coin cells C-CT.1 through CT.5 in Table X2, the electrolyte consisted of 1 M LiPF₆ dissolved in a solvent mixture of ethylene carbonate and ethylmethyl carbonate mixed in a proportion of 50:50 in weight percent and additionally containing 2 wt.% vinylene carbonate.

For full coin cells C-CT.6 ff. in Table X2, the electrolyte consisted of 1 M LiPF₆ in FEC:DEC:K2 (FEC= fluoroethylene carbonate, DEC = diethyl carbonate and K2 = 1H, 1H,5H-perfluoropentyl-1,1,2,2-tetrafluoroethylether) mixed in proportion of 12:64:24 in volume percent.

### IV. Evaluation of inventive electrochemical cells

### IV.1 Evaluation of cycling of coin cells based upon C-CT.1 through CT.5

### IV.1 Formation at 25 °C

The respective coin full-cells were charged at a constant current of 0.1 C to a voltage of 4.2 V (CCCV charge, CV-step maximum duration of 30 minutes) and discharged at 0.1 C (2.7 V cut-off) (Cycle 1). Immediately after, the cells are charged at 25 °C at a constant current of 0.5 C to a voltage of 4.2 V (CCCV charge, CV-step maximum duration of 30 minutes) and discharged at 0.1 C (2.7 V cut-off) (Cycle 2). The charging procedure of cycle 2 was repeated 3 more times (Cycle 3-5). Then, the cells are charged at a constant current of 0.5 C to a voltage of 4.2 V, charged at 4.2 V for 30 minutes and, while keeping constant these charging conditions, then the cells are discharged to a discharge voltage of 2.7 V at a constant current of 1 C (2 times, cycles 6 to 7), 2 C (2 times, cycles 8 to 9) and 3 C (2 times, cycles 10 to 11). Finally, the cells are charged and discharged 11 times following the same procedure as that used in cycle 2.

### IV.2 Evaluation of cycling of coin cells at 25 °C and 4.35 V as upper cut-off voltage

Once the cells are formed they were charged at a constant current of 0.2 C to a voltage of 4.35 V and then discharged at a constant current of 0.1 C to a discharge voltage of 3.0 V. This procedure was repeated once (cycle 12 and 13). The charge capacity from cycle 13 was set as the reference discharge capacity value obtained at 0.2 C, corresponding to 100 % (capacity check at 0.2 C procedure), and is further used as reference value for the subsequent cycle (cycle 14), in which the cells are charged sequentially in 25 % SOC-steps at a constant current of 0.2 C. After each charging step, the cell resistance was determined by carrying out DC internal resistance (DCIR) measurements by applying a current interrupt. After reaching 100 %SOC (4 charging 25% SOC-steps) the cells were discharged at 0.2 C to 3.0 V (Cell resistance determination procedure).

Following the first cell resistance measurements in cycle 14, the cells were charged at a constant current of 1 C to a voltage of 4.35 V, charged at 4.35 V until the current reached a value of 0.01 C or a maximum of 2 hours and discharged to a voltage of 3.0 V at a constant current of 1 C (Cycle 15). The discharge capacity measured in cycle 15 was set as the reference discharge capacity value obtained at 1 C and corresponding to 100 %. This charge and discharge procedure was repeated 100 times. The discharge capacities after the resulting 100 cycles at 1 C and were expressed as a percentage of the reference discharge capacity measured in cycle 15 (1 C prolonged cycling procedure). Then, the procedures sequence composed of capacity check at 0.2 C, cell resistance determination and 1 C prolonged cycling was repeated a minimum of two times or until the cells reached capacities at 1 C below 70 % of the reference value in cycle 15. The results after 300 cycles at 1 C from the various examples are presented in Table X3.

**Table X3. Electrochemical data**

| Cathode | Remaining Capacity at 1C after 300 Cycles | Remaining capacity at 0.2 C after 300 cycles | Cell resistance increase after 300 cycles |
|---|---|---|---|
| C-CT.1 | 75.7% | 77.8% | 361% |
| CT.2 (Inventive) | 81.2% | 83.8% | 253% |
| CT.3 (Inventive) | 85.8% | 86.5% | 272% |
| CT.4 (Inventive) | 87.0% | 88.9% | 261% |
| CT.5 (Inventive) | 88.5% | 88.0% | 227% |

### IV.1.3 Evaluation of cycling and cell resistance in coin full cells at 25 °C based upon C-CT.6 through CT.16

The respective coin full cells were charged at a constant current of 0.067 C to a voltage of 4.7 V and discharged with a constant current of 0.067 C to a discharge voltage of 2.0 V (First activation cycle; cycle 1) at 25 °C. Immediately after, the cells are charged at 25 °C at a constant current of 0.1 C to a voltage of 4.6 V. The cells were further charged at 4.6 V until the current reached a value of 0.05 C and then discharged at a constant current of 0.1 C to a discharge voltage of 2.0 V (cycle 2). The same procedure as in the second cycle was repeated once (cycle 3). The cells are then charged at a constant current of 0.1 C to a voltage of 4.6 V and then discharged at a constant current of 0.1 C to a discharge voltage of 2.0 V (cycle 4). The charge capacity from cycle 4 was set as the reference discharge capacity value obtained at 0.1 C, corresponding to 100 % (capacity check at 0.1 C procedure). The charge capacity from this cycle was also used as reference value for the subsequent cycle (cycle 5), in which the cells were charged at a constant current of 0.1 C up to 40% of the charge capacity of cycle 5 (40% SOC). Once the cells reached 40% SOC, DC internal resistance (DCIR) measurements were carried out by applying a current interrupt (Cell resistance determination procedure).

In the cycles 6 to 7, the cells are charged at 25 °C at a constant current of 0.2 C to a voltage of 4.6 V. The cells were further charged at 4.6 V until the current reached a value of 0.05 C and then discharged at a constant current of 0.5 C to a discharge voltage of 2.0 V. Then, the cells are charged at a constant current of 0.7 C to a voltage of 4.6 V, charged at 4.6 V until the current reached a value of 0.05 C and, while keeping constant these charging conditions, the cells are discharged to a discharge voltage of 2.0 V at a constant current of 1 C (2 times, cycles 8 to 9), 2 C (2 times, cycles 10 to 11) and 3 C (2 times, cycles 12 to 13).

Following the variation of discharge rates, prolonged cycling was carried out by charging the cells at a constant current of 0.7 C to a voltage of 4.6 V, charging at 4.6 V until the current reached a value of 0.05 C and discharging to a discharge voltage of 2.0 V at a constant current of 1 C (Cycle 14). The discharge capacity measured for cycle 14 was recorded as the first discharge capacity at 1 C and set as the reference discharge capacity value obtained at 1 C and corresponding to 100 %. This charge and discharge procedure was repeated at least 100 times or until the measured charge capacity is lower than 70% of the charge capacity of cycle 14. During the prolonged cycling experiments, capacity check at 0.1 C and DC internal resistance (DCIR) measurements at 40 % SOC were carried out every 100 cycles. The latter was accomplished by repeating the cycling sequence described for cycles 2 to 5 every 100 1C-cycles. The results from the various examples are presented in Table X4.

**Table X4. Electrochemical data**

| Cathode | Remaining Capacity at 1 C after 100 Cycles at 1 C | Remaining Capacity at 0.1 after 100 cycles at 1 C | Cell resistance increase after 100 Cycles at 1 C |
|---|---|---|---|
| C-CT.6 | < 70% | - | - |
| CT.7 | 89.5% | 89.4% | 120.3% |
| CT.8 | 87.1% | 84.0% | 148.8% |
| C-CT.9 | < 70 % | - | - |
| C-CT.10 | < 70% | - | - |
| CT.11 | 87.6% | 88.0% | 135.0% |
| CT.12 | 89.4% | 90.5% | 131.6% |
| CT.13 | 92.8% | 90.8% | 171.1% |
| CT.14 | 89.2% | 87.6% | 156.5% |

## Claims

1. Process for making a cathode comprising the following steps
(a) providing a cathode active material selected from layered lithium transition metal oxides, lithiated spinels, lithium transition metal phosphates with olivine structure, and lithium nickel-cobalt aluminum oxides,
(b) treating said cathode active material with an oligomer bearing units according to general formula (I a), 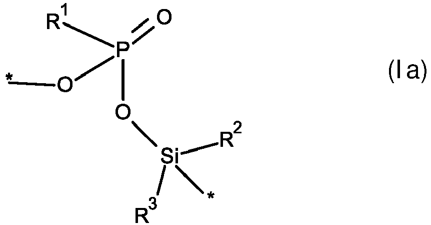 wherein
R¹ are the same or different and selected from hydrogen, C₁-C₄-alkyl, aryl, and C₄-C₇-cycloalkyl,
R² and R³ are selected independently at each occurrence from phenyl, C₁-C₈-alkyl, C₄-C₇-cycloalkyl, C₁-C₈-haloalkyl, OPR¹(O)-*, and -(CR⁹₂)ₚ-Si(R²)₂-* wherein one or more non-vicinal CR⁹₂-groups may be replaced by oxygen, R⁹ is selected independently at each occurrence from H and C₁-C₄-alkyl, and p is a variable from zero to 6,
wherein the overall majority of R² and R³ is selected from C₁-C₈-alkyl,
and wherein the asterisk * is a placeholder for at least one more unit of formula (I a), or for an end-cap R⁴ with R⁴ being selected from C₁-C₄-alkyl, or for a branching,
and, optionally, at least one of carbon in electrically conductive form and, optionally, a binder,
(c) applying a slurry of said treated cathode active material to a current collector, and
(d) at least partially removing solvent.

2. Process according to claim 1 wherein in step (b), an oligomer is used that bears at least two P atoms per molecule as average.

3. Process according to claim 1 or 2 wherein R¹ is selected from hydrogen and methyl and all R² and R³ are methyl.

4. Process according to any of the preceding claims wherein step (b) is performed at a temperature in the range of from 5 to 200°C.

5. Process according to any of the proceeding claims wherein said oligomer is end-capped with O-R⁴ groups wherein R⁴ is selected from C₁-C₄-alkyl.

6. Process according to any of the preceding claims wherein step (c) is performed with a squeegee or an extruder.

7. Process according to any of the preceding claims wherein step (b) is performed in an aprotic solvent that is selected from aprotic solvents with a boiling point at normal pressure in the range of from 25 to 250°C.

8. Process according to any of the preceding claims comprising an additional step of mixing an oligomer bearing units according to general formulae (I a) with carbon in electrically conductive form and, optionally, a binder in the presence of an aprotic solvent but in the absence of said cathode active material, said additional mixing step being performed before step (b).

9. Process according to any of the preceding claims wherein said cathode active material is selected from layered lithium transition metal oxides and lithium nickel-cobalt aluminum oxides.

10. Oligomer bearing units according to formula (I a) 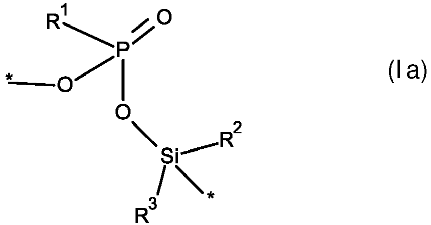 wherein
R¹ are the same or different and selected from hydrogen, C₁-C₄-alkyl, aryl, and C₄-C₇-cycloalkyl,
R² and R³ are selected independently at each occurrence from phenyl, C₁-C₈-alkyl, C₄-C₇-cycloalkyl, C₁-C₈-haloalkyl, OPR¹(O)-*, and -(CR⁹₂)ₚ-Si(R²)₂-* wherein one or more non-vicinal CR⁹₂-groups may be replaced by oxygen, R⁹ is selected independently at each occurrence from H and C₁-C₄-alkyl, and p is a variable from zero to 6,
and wherein the overall majority of R² and R³ is selected from C₁-C₈-alkyl,
wherein the asterisk * is a placeholder for at least one more unit of formula (I a), or for an end-cap R⁴ with R⁴ being selected from C₁-C₄-alkyl, or for a branching, and
wherein the average of units according to formula (I a) per molecule is at least three and wherein said oligomer has a total chlorine content in the range of from 1 ppm to 100 ppm.

11. Oligomer according to claim 10 wherein said oligomer has a dynamic viscosity in the range of from 10 mPa·s to 10,000 mPa·s, determined at 20°C.

12. Oligomer according to claim 10 or 11 wherein R¹ is selected from hydrogen and methyl and all R² and R³ are methyl.

## Patentansprüche

1. Verfahren zur Herstellung einer Kathode, umfassend die folgenden Schritte
(a) Bereitstellen eines aktiven Kathodenmaterials ausgewählt aus Lithium-Übergangsmetall-Schichtoxiden, lithiierten Spinellen, Lithiumübergangsmetallphosphaten mit Olivinstruktur und Lithium-Nickel-Cobalt-Aluminiumoxiden,
(b) Behandeln des aktiven Kathodenmaterials mit einem Oligomer, das Einheiten gemäß der allgemeinen Formel (I a) trägt, 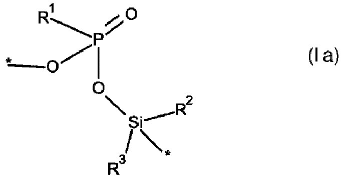 wobei
R¹ gleich oder verschieden sind und ausgewählt sind aus Wasserstoff, C₁-C₄-Alkyl, Aryl und C₄-C₇-Cycloalkyl,
R² und R³ bei jedem Auftreten unabhängig ausgewählt sind aus Phenyl, C₁-C₈-Alkyl, C₄-C₇-Cycloalkyl, C₁-C₈-Halogenalkyl, OPR¹(O)-* und - (CR⁹₂)ₚ-Si(R²)₂-*, wobei eine oder mehrere nichtvicinale CR⁹₂-Gruppen durch Sauerstoff ersetzt sein können, R⁹ bei jedem Auftreten unabhängig ausgewählt ist aus H und C₁-C₄-Alkyl, und p eine Variable von null bis 6 ist,
wobei die absolute Mehrheit von R² und R³ ausgewählt ist aus C₁-C₈-Alkyl,
und wobei das Sternchen * ein Platzhalter für wenigstens eine weitere Einheit der Formel (I a) oder für eine Endkappe R⁴, wobei R⁴ ausgewählt ist aus C₁-C₄-Alkyl, oder für eine Verzweigung ist,
und gegebenenfalls wenigstens einem von Kohlenstoff in elektrisch leitfähiger Form und gegebenenfalls einem Bindemittel,
(c) Aufbringen einer Aufschlämmung des behandelten aktiven Kathodenmaterials auf einen Stromabnehmer und
(d) wenigstens teilweises Entfernen von Lösungsmittel.

2. Verfahren gemäß Anspruch 1, wobei bei Schritt (b) ein Oligomer verwendet wird, das im Mittel wenigstens zwei P-Atome pro Molekül trägt.

3. Verfahren gemäß Anspruch 1 oder 2, wobei R¹ ausgewählt ist aus Wasserstoff und Methyl und alle R² und R³ Methyl sind.

4. Verfahren gemäß einem der vorstehenden Ansprüche, wobei Schritt (b) bei einer Temperatur in dem Bereich von 5 bis 200 °C durchgeführt wird.

5. Verfahren gemäß einem der vorstehenden Ansprüche, wobei das Oligomer mit O-R⁴-Gruppen endverkappt ist, wobei R⁴ ausgewählt ist aus C₁-C₄-Alkyl.

6. Verfahren gemäß einem der vorstehenden Ansprüche, wobei Schritt (c) mit einem Rakel oder einem Extruder durchgeführt wird.

7. Verfahren gemäß einem der vorstehenden Ansprüche, wobei Schritt (b) in einem aprotischen Lösungsmittel durchgeführt wird, das ausgewählt ist aus aprotischen Lösungsmitteln mit einem Siedepunkt bei Normaldruck in dem Bereich von 25 bis 250 °C.

8. Verfahren gemäß einem der vorstehenden Ansprüche, umfassend einen zusätzlichen Schritt des Mischens eines Oligomers, das Einheiten gemäß der allgemeinen Formel (I a) trägt, mit Kohlenstoff in elektrisch leitfähiger Form und gegebenenfalls einem Bindemittel in Gegenwart eines aprotischen Lösungsmittels aber ohne Vorhandensein des aktiven Kathodenmaterials, wobei der zusätzliche Mischschritt vor Schritt (b) durchgeführt wird.

9. Verfahren gemäß einem der vorstehenden Ansprüche, wobei das aktive Kathodenmaterial ausgewählt ist aus Lithium-Übergangsmetall-Schichtoxiden und Lithium-Nickel-Cobalt-Aluminiumoxiden.

10. Oligomer, das Einheiten gemäß Formel (I a) trägt, 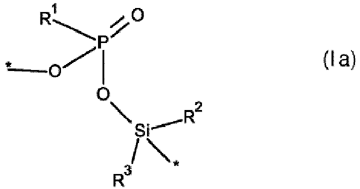 wobei
R¹ gleich oder verschieden sind und ausgewählt sind aus Wasserstoff, C₁-C₄-Alkyl, Aryl und C₄-C₇-Cycloalkyl,
R² und R³ bei jedem Auftreten unabhängig ausgewählt sind aus Phenyl, C₁-C₈-Alkyl, C₄-C₇-Cycloalkyl, C₁-C₈-Halogenalkyl, OPR¹(O)-* und -(CR⁹₂)ₚ-Si(R²)₂-*, wobei eine oder mehrere nichtvicinale CR⁹₂-Gruppen durch Sauerstoff ersetzt sein können, R⁹ bei jedem Auftreten unabhängig ausgewählt ist aus H und C₁-C₄-Alkyl, und p eine Variable von null bis 6 ist,
und wobei die absolute Mehrheit von R² und R³ ausgewählt ist aus C₁-C₈-Alkyl,
wobei das Sternchen * ein Platzhalter für wenigstens eine weitere Einheit der Formel (I a) oder für eine Endkappe R⁴, wobei R⁴ ausgewählt ist aus C₁-C₄-Alkyl, oder für eine Verzweigung ist, und
wobei der Mittelwert an Einheiten gemäß Formel (I a) pro Molekül wenigstens drei beträgt und wobei das Oligomer einen Gesamtchlorgehalt in dem Bereich von 1 ppm bis 100 ppm aufweist.

11. Oligomer gemäß Anspruch 10, wobei das Oligomer eine dynamische Viskosität in dem Bereich von 10 mPa·s bis 10.000 mPa·s, bestimmt bei 20 °C, aufweist.

12. Oligomer gemäß Anspruch 10 oder 11, wobei R¹ ausgewählt ist aus Wasserstoff und Methyl und alle R² und R³ Methyl sind.

## Revendications

1. Procédé pour la fabrication d'une cathode comprenant les étapes suivantes
(a) fourniture d'un matériau actif de cathode choisi parmi des oxydes de métal de transition de lithium stratifiés, des spinelles lithiés, des phosphates de métal de transition de lithium dotés d'une structure d'olivine et des oxydes d'aluminium nickel-cobalt lithium,
(b) traitement dudit matériau actif de cathode par un oligomère portant des motifs selon la formule générale (I a), 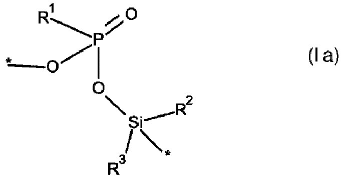 wherein
R¹ étant identiques ou différents et choisis parmi hydrogène, C₁-C₄-alkyle, aryle et C₄-C₇-cycloalkyle,
R² et R³ étant choisis indépendamment en chaque occurrence parmi phényle, C₁-C₈-alkyle, C₄-C₇-cycloalkyle, C₁-C₈-halogénoalkyle, OPR¹(O)-* et -(CR⁹₂)ₚ-Si(R²)₂-*, un ou plusieurs groupes CR⁹₂ non vicinaux pouvant être remplacés par oxygène, R⁹ étant indépendamment choisi en chaque occurrence parmi H et C₁-C₄-alkyle, et p étant une variable de zéro à 6,
la majorité globale de R² et R³ étant choisis parmi C₁-C₈-alkyle,
et l'astérisque * étant une balise pour au moins un motif supplémentaire de formule (I a), ou pour une coiffe de terminaison R⁴, R⁴ étant choisi parmi C₁-C₄-alkyle, ou pour une ramification,
et, éventuellement, au moins l'un parmi un carbone sous forme électriquement conductrice et, éventuellement, un liant,
(c) application d'une suspension dudit matériau actif de cathode traité sur un collecteur de courant, et
(d) élimination de manière au moins partielle de solvant.

2. Procédé selon la revendication 1, dans l'étape (b), un oligomère étant utilisé qui porte au moins deux atomes de P par molécule en moyenne.

3. Procédé selon la revendication 1 ou 2, R¹ étant choisi parmi hydrogène et méthyle et tous les R² et R³ étant méthyle.

4. Procédé selon l'une quelconque des revendications précédentes, l'étape (b) étant réalisée à une température dans la plage allant de 5 à 200 °C.

5. Procédé selon l'une quelconque des revendications précédentes, ledit oligomère étant coiffé en terminaison par des groupes O-R⁴, R⁴ étant choisi parmi C₁-C₄-alkyle.

6. Procédé selon l'une quelconque des revendications précédentes, l'étape (c) étant réalisée avec un essoreur ou une extrudeuse.

7. Procédé selon l'une quelconque des revendications précédentes, l'étape (b) étant réalisée dans un solvant aprotique qui est choisi parmi des solvants aprotiques dotés d'un point d'ébullition à pression normale dans la plage allant de 25 à 250 °C.

8. Procédé selon l'une quelconque des revendications précédentes comprenant une étape supplémentaire de mélange d'un oligomère portant des motifs selon les formules générales (I a) avec du carbone sous forme électriquement conductrice et, éventuellement, un liant en la présence d'un solvant aprotique mais en l'absence dudit matériau actif de cathode, ladite étape de mélange supplémentaire étant réalisée avant l'étape (b).

9. Procédé selon l'une quelconque des revendications précédentes, ledit matériau actif de cathode étant choisi parmi des oxydes de métal de transition de lithium stratifiés et des oxydes d'aluminium nickel-cobalt lithium.

10. Oligomère portant des motifs selon la formule (I a) 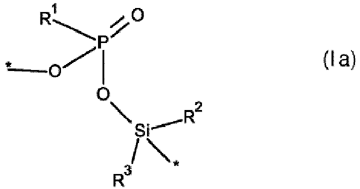 wherein
R¹ étant identiques ou différents et choisis parmi hydrogène, C₁-C₄-alkyle, aryle et C₄-C₇-cycloalkyle,
R² et R³ étant choisis indépendamment en chaque occurrence parmi phényle, C₁-C₈-alkyle, C₄-C₇-cycloalkyle, C₁-C₈-halogénoalkyle, OPR¹(O)-* et -(CR⁹₂)ₚ-Si(R²)₂-*, un ou plusieurs groupes CR⁹₂ non vicinaux pouvant être remplacés par oxygène, R⁹ étant indépendamment choisi en chaque occurrence parmi H et C₁-C₄-alkyle, et p étant une variable de zéro à 6,
et la majorité globale de R² et R³ étant choisis parmi C₁-C₈-alkyle,
l'astérisque * étant une balise pour au moins un motif supplémentaire de formule (I a), ou pour une coiffe de terminaison R⁴, R⁴ étant choisi parmi C₁-C₄-alkyle, ou pour une ramification, et
la moyenne de motifs selon la formule (I a) par molécule étant d'au moins trois et ledit oligomère ayant une teneur totale en chlore dans la plage allant de 1 ppm à 100 ppm.

11. Oligomère selon la revendication 10, ledit oligomère ayant une viscosité dynamique dans la plage allant de 10 mPa·s à 10 000 mPa·s, déterminée à 20 °C.

12. Oligomère selon la revendication 10 ou 11, R¹ étant choisi parmi hydrogène et méthyle et tous les R² et R³ étant méthyle.
